# EUROPÄISCHE PATENTSCHRIFT

(11) **EP 2 789 423 B1**
(45) Veröffentlichungstag und Bekanntmachung des Hinweises auf die Patenterteilung: **08.07.2015**
(21) Anmeldenummer: 13001789.0
(22) Anmeldetag: 08.04.2013
(51) Int. Cl.: B23Q 11/12

(54) **Zweigeteilte Werkzeugspindel mit einer Flüssigkeitskühlung**
Tool spindle divided in two with liquid cooling
Broche d'outil divisée en deux et dotée d'un refroidissement de liquide

(43) Veröffentlichungstag der Anmeldung: 15.10.2014
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, Dipl.-Ing. (FH), 78598 Königsheim (DE); Kammerer, Mathias, Dipl.-Ing. (FH), 78662 Herrenzimmern (DE)
(74) Vertreter: Hoefer & Partner Patentanwälte mbB

(56) Entgegenhaltungen:
- EP-A2- 1 736 277
- EP-B1- 1 609 549
- JP-A- H03 142 142

## Beschreibung

Die Erfindung betrifft eine zweigeteilte kraftbetriebene Werkzeugspindel für eine spanende Werkstückbearbeitung in einem vertikalen oder horizontalen Bearbeitungszentrum, insbesondere für eine Fräs-, Bohr- und/oder Drehbearbeitung, mit einem Spindelmotorgehäuse, in dem ein Flüssigkeitskühlkanal verläuft, und mit einem Spindelkopfgehäuse, in dem ein Flüssigkeitskühlkanal verläuft, wobei die Flüssigkeitskühlkanäle einen Flüssigkeitskühlkreislauf für ein Kühlmittel bilden.

Unter dem Begriff - zweigeteilte kraftbetriebene Werkzeugspindel - wird im Sinne der vorliegenden Erfindung eine motorisch angetriebene Werkzeugspindel verstanden, die aus den beiden Teilen "Spindelmotor" und "Spindelkopf" besteht. Die im Spindelmotor integrierte Motorwelle und die im Spindelkopf integrierte Spindelwelle sind jeweils separat drehbar gelagert. Das vom Spindelmotor erzeugte Drehmoment wird über eine Kupplung an die im Spindelkopf befindliche Spindelwelle übertragen. Der Spindelkopf ist für Wartungs- und Instandhaltungsarbeiten demontierbar und falls erforderlich durch einen baugleichen Spindelkopf austauschbar.

Unter dem Begriff - vertikales oder horizontales Bearbeitungszentrum - wird im Sinne der vorliegenden Erfindung ein Bearbeitungszentrum verstanden, bei dem die Werkstückbearbeitung durch die vertikal oder horizontal ausgerichtete Werkzeugspindel ausgeführt wird.

In der WO 2011/068 637 A1 ist eine einteilige kraftbetriebene Werkzeugspindel für ein Bearbeitungszentrum erläutert, die einen Flüssigkeitskühlkanal für den Spindelmotor und einen Flüssigkeitskühlkanal für den Spindelkopf aufweist, so dass nicht nur der Spindelmotor, sondern auch der Spindelkopf gekühlt werden. Beide Flüssigkeitskühlkanäle sind über eine Schnittstelle miteinander verbunden. Allerdings handelt es sich bei der aufgezeigten Werkzeugspindel um eine einteilige kraftbetriebene Werkzeugspindel, bei der die Vorteile einer besonders einfachen Instandsetzung durch den Ausbau oder Austausch des Spindelkopfes als separierte Baugruppe aber nicht bestehen.

In den EP 1 609 549 B1 und JP 3-142 142 sind zweigeteilte kraftbetriebene Werkzeugspindeln mit einem Flüssigkeitskühlkanal im Spindelmotorgehäuse und einem Flüssigkeitskühlkanal im Spindelkopfgehäuse beschrieben. Für die Schadensinstandsetzung solcher zweigeteilter Werkzeugspindeln mit verbundenen Flüssigkeitskühlkanälen im Spindelmotor und im Spindelkopf gilt als nachteilig, dass die Kühlflüssigkeit unkontrolliert abfließt, weil der Flüssigkeitskühlkreislauf geöffnet wird, wenn für die Instandsetzungsarbeiten der Spindelkopf von der übrigen Werkzeugspindel demontiert werden muss. Dabei kann die Kühlflüssigkeit einerseits in die Lagerung des Spindelkopfes eindringen oder andererseits in den Arbeitsraum der Werkzeugspindel abfließen, wo sie das Kühlschmiermedium des Bearbeitungszentrums verunreinigt.

Ausgehend vom Stand der Technik liegt der vorliegenden Erfindung die Aufgabe zugrunde, eine Werkzeugspindel der eingangs genannten Art zu schaffen, mit der die Kühlflüssigkeit aus dem Flüssigkeitskühlkreislauf abgelassen werden kann, bevor mit der Demontage des Spindelkopfes begonnen wird. Diese Einrichtung soll konstruktiv und fertigungstechnisch mit geringem Aufwand realisierbar sein.

Diese erfindungsgemäße Aufgabe wird bei einer zweigeteilten kraftbetriebenen Werkzeugspindel für eine spanende Werkstückbearbeitung in einem vertikalen oder horizontalen Bearbeitungszentrum, insbesondere für eine Fräs-, Bohr- und/oder Drehbearbeitung, mit einem Spindelmotorgehäuse, in dem ein Flüssigkeitskühlkanal verläuft, und mit einem Spindelkopfgehäuse, in dem ein Flüssigkeitskühlkanal verläuft, wobei die Flüssigkeitskühlkanäle einen Flüssigkeitskühlkreislauf für ein Kühlmittel bilden, erfindungsgemäß dadurch gelöst, dass vom Flüssigkeitskühlkanal im Spindelkopfgehäuse oder vom Flüssigkeitskühlkanal im Spindelmotorgehäuse ein Flüssigkeitskanal abzweigt, durch den das Kühlmittel aus dem Flüssigkeitskühlkreislauf zu mindestens einer wiederverschließbaren Auslassöffnung im Spindelkopfgehäuse oder im Spindelmotorgehäuse leitbar ist, so dass die Kühlflüssigkeit im Spindelmotorgehäuse und die Kühlflüssigkeit im Spindelkopfgehäuse durch die Schwerkraft aus der Werkzeugspindel abfließen kann.

Die erfindungsgemäße Ausgestaltung bietet eine einfache Lösung zur Beseitigung der aufgeführten Nachteile für eine Werkzeugspindel der eingangs genannten Art, indem die Kühlflüssigkeit vor Beginn der Instandhaltungsarbeiten durch mindestens eine wiederverschließbare Auslassöffnung kontrolliert aus dem Flüssigkeitskühlkreislauf abgelassen werden kann und somit nicht an empfindliche Bauteile des Spindelkopfes gelangen kann oder unkontrolliert abfließt. Des Weiteren wird durch die Erfindung die Vorgehensweise zur Demontage eines Spindelkopfes für den Servicetechniker sicherer und angenehmer, da er nun die Möglichkeit hat, den Austritt der Kühlflüssigkeit mit einem mobilen Behältnis kontrolliert aufzufangen, so dass ein Hautkontakt mit der Kühlflüssigkeit weitestgehend vermieden werden kann.

Vorteilhafte Weiterbildungen ergeben sich aus den Unteransprüchen.

Gemäß einer bevorzugten Weiterbildung ist die Auslassöffnung über ein manuelles oder kraftbetätigtes Ablassventil wiederverschließbar.

Gemäß einer bevorzugten Weiterbildung weist das Ablassventil einen Elektromagneten zum Öffnen und eine Feder zum Schließen auf.

Alternativ kann das Ablassventil mit Handbetätigung geöffnet und mit Federbetätigung geschlossen werden.

Gemäß einer bevorzugten Weiterbildung ist die Auslassöffnung mittels einer mit einer Dichtung versehenen Verschlussschraube wiederverschließbar.

Gemäß einer bevorzugten Weiterbildung ist die Auslassöffnung am tiefsten Punkt im Flüssigkeitskühlkanal des Spindelkopfgehäuses angebracht.

Gemäß einer bevorzugten Weiterbildung ist die Auslassöffnung am tiefsten Punkt im Flüssigkeitskühlkanal des Spindelmotorgehäuses angebracht. Weitere Einzelheiten, Merkmale und Vorteile der Erfindung ergeben sich aus der nachfolgenden Beschreibung anhand der Zeichnungen. Es zeigen:
- Figur 1: einen Schnitt durch eine zweigeteilte Werkzeugspindel, wobei Spindelmotor und Spindelkopf zusammengesetzt sind,
- Figur 2: einen Schnitt durch eine zweigeteilte Werkzeugspindel, wobei Spindelmotor und Spindelkopf voneinander getrennt sind, und
- Figur 3: einen Schnitt durch den Spindelkopf.

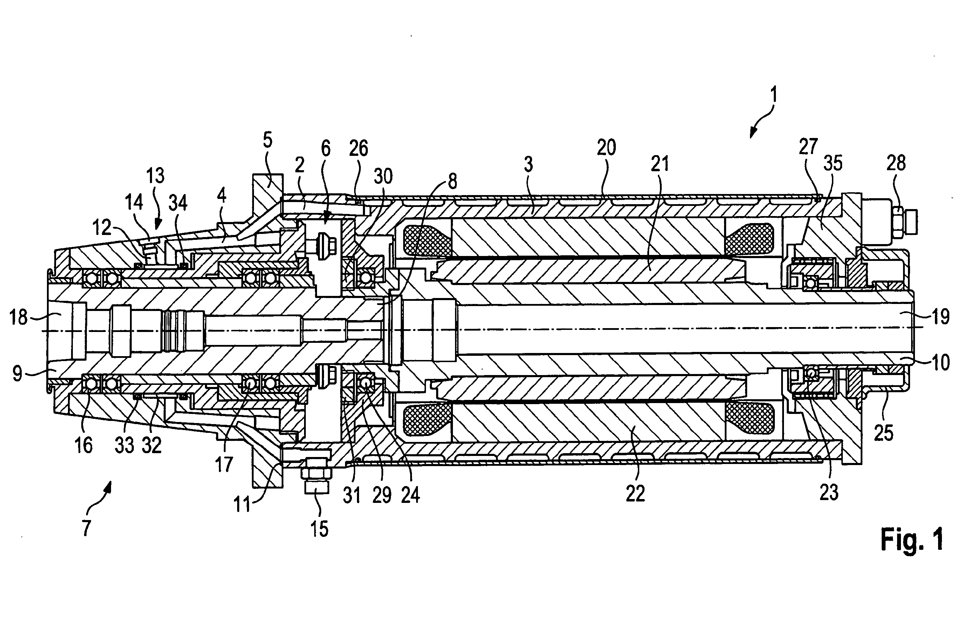

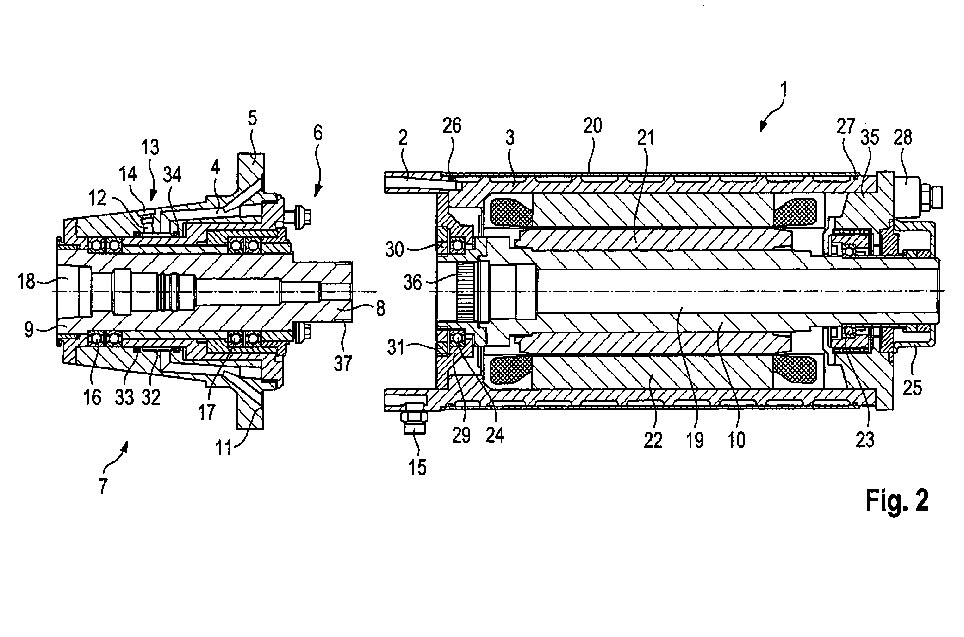

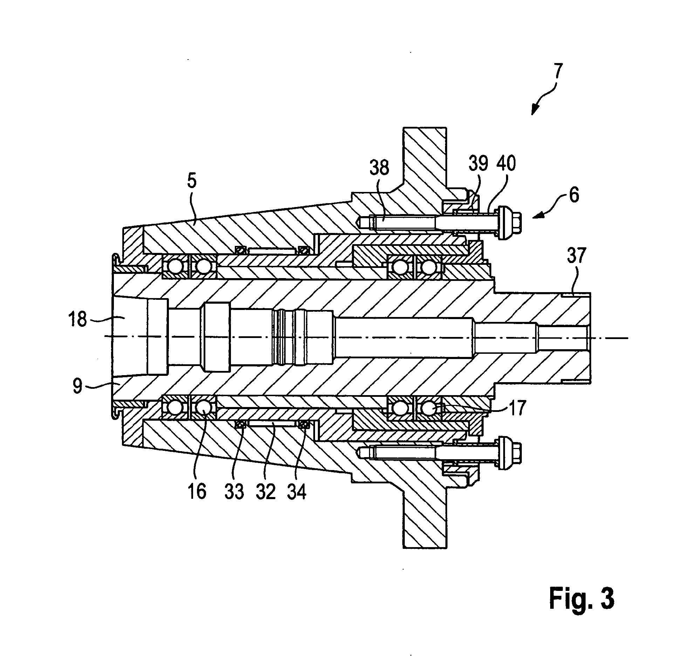

In den Figuren 1 bis 3 ist eine zweigeteilte kraftbetriebene Werkzeugspindel dargestellt, wie sie in einem vertikalen Bearbeitungszentrum für eine spanende Werkstückbearbeitung, insbesondere in einem multifunktionalen Bearbeitungszentrum für die spanende Fräs-, Bohr- und/oder Drehbearbeitung, Verwendung finden kann.

Die zweigeteilte Werkzeugspindel besteht aus einem Spindelmotor 1 und einem Spindelkopf 7.

Der Spindelmotor 1 weist ein rohrförmiges Spindelmotorgehäuse 3 mit einer im Wesentlichen zylindrischen Oberfläche auf, auf der ein Flüssigkeitskühlkanal 2 ausgebildet ist. Der Flüssigkeitskühlkanal 2 ist außen von einem Kühlmantel 20 umgeben, der über Dichtungen 26 und 27 an dem Spindelmotorgehäuse 3 anliegt.

Innerhalb des Spindelmotorgehäuses 3 ist ein Stator 22 angeordnet, welcher einen Rotor 21 umgibt. Innerhalb des Rotors 21 ist eine Motorwelle 10 gelagert, welche mit einer Durchgangsbohrung 19 für die Aufnahme eines Werkzeugspanners versehen ist.

An seinem dem Spindelkopf 7 abgewandten Ende weist das Spindelmotorgehäuse 3 ein Lagerschild 35 auf, in dem ein Wälzlager 23 gehalten ist, welches die Motorwelle 10 lagert. An dem Lagerschild 35 ist weiterhin ein Lagerdeckel 25 und ein axial ausgerichteter Kühlmittelanschluss 28 für den Rücklauf des Kühlmittels angeordnet.

An seinem dem Spindelkopf 7 zugewandten Ende weist das Spindelmotorgehäuse 3 eine Lageraufnahme 29 auf, die ein Wälzlager 24 trägt, welches die Motorwelle 10 lagert. Das Wälzlager 24 ist über Gewindeelemente 30, 31 an der Lageraufnahme 29 gehalten. Weiterhin ist das Spindelmotorgehäuse 3 an seinem dem Spindelkopf 7 zugewandten Ende mit einem radial ausgerichteten Kühlmittelanschluss 15 für den Vorlauf des Kühlmittels versehen.

Die Motorwelle 10 ist im Bereich des dem Spindelkopf 7 zugewandten Endes mit einem Zahnkranzelement 36 versehen, das im dargestellten Ausführungsbeispiel mit einer Evolventenverzahnung, insbesondere mit einer Keilverzahnung, versehen ist.

Der Spindelkopf 7 weist ein rohrförmiges Spindelkopfgehäuse 5 mit einer im Wesentlichen kegelstumpfförmigen Oberfläche auf. In dem Spindelkopfgehäuse 5 ist ein Flüssigkeitskühlkanal 4 ausgebildet, der über eine mit einem Dichtelement 11 versehene Schnittstelle mit dem Flüssigkeitskühlkanal 2 im Spindelmotorgehäuse 3 verbunden werden kann. Der Flüssigkeitskühlkanal 4 im Spindelkopfgehäuse 5 steht mit einem Flüssigkeitskanal 12 in Verbindung, der in eine wiederverschließbare Auslassöffnung 13 mündet, die mit einer mit einer Dichtung versehenen Verschlussschraube 14 verschlossen werden kann.

Über diese Verschlussschraube 14 kann bei Instandsetzungsarbeiten die Kühlflüssigkeit aus dem Flüssigkeitskühlkreislauf abgelassen werden.

Wie in den Figuren 1 bis 3 zu erkennen ist, ist zwischen dem Flüssigkeitskühlkanal 4 im Spindelkopfgehäuse 5 und dem Flüssigkeitskanal 12 ein Kühlring 32 angeordnet, welcher über Dichtungen 33 und 34, die beispielsweise als Stangendichtungen ausgebildet sind, gegenüber dem Spindelkopfgehäuse 5 abgedichtet ist.

In dem Spindelkopfgehäuse 5 ist über Wälzlager 16 und 17 eine Spindelwelle 9 gelagert ist, die mit einer Durchgangsbohrung 18 für die Aufnahme eines Werkzeugspanners versehen ist. Die Spindelwelle 9 weist an ihrem dem Spindelmotorgehäuse 3 zugewandten Ende eine in axialer Richtung verschiebbare Kupplung 8 auf, um die Spindelwelle 9 mit der Motorwelle 10 in Eingriff zu bringen. Dazu ist das der Motorwelle 10 zugewandte Ende der Spindelwelle 9 mit einer Zahnnabe 37 versehen, die im dargestellten Ausführungsbeispiel mit einer Evolventenverzahnung, insbesondere mit einer Keilverzahnung, versehen ist. Diese Zahnnabe 37 greift im eingekuppelten Zustand in das an der Motorwelle 10 vorgesehene Zahnkranzelement 36 ein.

Die Verbindung zwischen Spindelwelle 9 und Motorwelle 10 ist im dargestellten Ausführungsbeispiel als Evolventenverzahnung, insbes. mit einer Keilverzahnung, ausgeführt, sie kann aber auch mit anderen Verbindungsarten realisiert werden; z. B. mit einer Stiftkupplung, mit einer Kupplung mit Polygonprofil, mit einer Klauenkupplung usw.

In dem Spindelkopfgehäuse 5 ist weiterhin eine in axialer Richtung verformungsfähige Auffahrsicherung 6 angeordnet, welche für die Aufnahme von möglichen Kollisionskräften bei einem Maschinencrash dient. Die Auffahrsicherung 6 weist eine in einer Ausnehmung 39 im Spindelkopfgehäuse 5 angeordnete Spannschraube 38 auf, welche in axialer Richtung über das Spindelkopfgehäuse 5 übersteht und in ihrem überstehenden Bereich mit einer Stauchhülse 40 versehen ist.

In dem in den Figuren dargestellten Ausführungsbeispiel ist der Flüssigkeitskanal 12 und die Auslassöffnung 13 im Spindelkopfgehäuse 5 angeordnet. Es ist jedoch auch eine Ausführungsform denkbar, bei welcher der Flüssigkeitskanal 12 und die Auslassöffnung 13 im Spindelmotorgehäuse 3 angeordnet sind.

Je nach Ausführung ist die Auslassöffnung 13 am tiefsten Punkt im Flüssigkeitskühlkanal 4 des Spindelkopfgehäuses 5 bzw. im Flüssigkeitskühlkanal 2 des Spindelmotorgehäuses 3 angebracht.

Weiterhin kann die Auslassöffnung 13 auch mit einem kraftbetätigten Ablassventil versehen sein. Beispielsweise können ein Elektromagnet zum Öffnen und eine Feder zum Schließen vorgesehen sein. Alternativ kann das Ablassventil auch mit Handbetätigung geöffnet und über eine Feder geschlossen werden.

Die vorhergehende Beschreibung der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

**Bezugszeichenliste**

| | |
|---|---|
| 1 | Spindelmotor |
| 2 | Flüssigkeitskühlkanal im Spindelmotorgehäuse |
| 3 | Spindelmotorgehäuse |
| 4 | Flüssigkeitskühlkanal im Spindelkopfgehäuse |
| 5 | Spindelkopfgehäuse |
| 6 | Auffahrsicherung |
| 7 | Spindelkopf |
| 8 | Kupplung |
| 9 | Spindelwelle |
| 10 | Motorwelle |
| 11 | Dichtelement |
| 12 | Flüssigkeitskanal |
| 13 | Auslassöffnung |
| 14 | Verschlussschraube |
| 15 | Kühlmittelanschluss Vorlauf |
| 16 | Wälzlager |
| 17 | Wälzlager |
| 18 | Durchgangsbohrung |
| 19 | Durchgangsbohrung |
| 20 | Kühlmantel |
| 21 | Rotor |
| 22 | Stator |
| 23 | Wälzlager |
| 24 | Wälzlager |
| 25 | Lagerdeckel |
| 26 | Dichtung |
| 27 | Dichtung |
| 28 | Kühlmittelanschluss Rücklauf |
| 29 | Lageraufnahme |
| 30 | Gewindeelemente |
| 31 | Gewindeelemente |
| 32 | Kühlring |
| 33 | Dichtung |
| 34 | Dichtung |
| 35 | Lagerschild |
| 36 | Zahnkranzelement |
| 37 | Zahnnabe |
| 38 | Spannschraube |
| 39 | Ausnehmung |
| 40 | Stauchhülse |

## Patentansprüche

1. Zweigeteilte kraftbetriebene Werkzeugspindel für eine spanende Werkstückbearbeitung in einem vertikalen oder horizontalen Bearbeitungszentrum, insbesondere für eine Fräs-, Bohr- und/oder Drehbearbeitung, mit einem Spindelmotorgehäuse (3), in dem ein Flüssigkeitskühlkanal (2) verläuft, und mit einem Spindelkopfgehäuse (5), in dem ein Flüssigkeitskühlkanal (4) verläuft, wobei die Flüssigkeitskühlkanäle (2, 4) einen Flüssigkeitskühlkreislauf für ein Kühlmittel bilden, **dadurch gekennzeichnet, dass** vom Flüssigkeitskühlkanal (4) im Spindelkopfgehäuse (5) oder vom Flüssigkeitskühlkanal (2) im Spindelmotorgehäuse (3) ein Flüssigkeitskanal (12) abzweigt, durch den das Kühlmittel aus dem Flüssigkeitskühlkreislauf zu mindestens einer wiederverschließbaren Auslassöffnung (13) im Spindelkopfgehäuse (5) oder im Spindelmotorgehäuse (3) leitbar ist, so dass die Kühlflüssigkeit im Spindelmotorgehäuse (3) und die Kühlflüssigkeit im Spindelkopfgehäuse (5) durch die Schwerkraft aus der Werkzeugspindel abfließen kann.

2. Werkzeugspindel nach Anspruch 1 **dadurch gekennzeichnet, dass** die Auslassöffnung (13) über ein manuelles oder kraftbetätigtes Ablassventil wiederverschließbar ist.

3. Werkzeugspindel nach Anspruch 2 **dadurch gekennzeichnet, dass** das Ablassventil einen Elektromagneten zum Öffnen und eine Feder zum Schließen aufweist.

4. Werkzeugspindel nach Anspruch 2 **dadurch gekennzeichnet, dass** das Ablassventil mit Handbetätigung zu öffnen und mit Federbetätigung zu schließen ist.

5. Werkzeugspindel nach Anspruch 1 **dadurch gekennzeichnet, dass** die Auslassöffnung (13) mittels einer mit einer Dichtung versehenen Verschlussschraube (14) wiederverschließbar ist.

6. Werkzeugspindel nach einem der vorhergehenden Ansprüchen **dadurch gekennzeichnet, dass** die Auslassöffnung (13) am tiefsten Punkt im Flüssigkeitskühlkanal (4) des Spindelkopfgehäuses (5) angebracht ist.

7. Werkzeugspindel nach einem der vorhergehenden Ansprüchen **dadurch gekennzeichnet, dass** die Auslassöffnung (13) am tiefsten Punkt im Flüssigkeitskühlkanal (2) des Spindelmotorgehäuses (3) angebracht ist.

## Claims

1. Two-part power-operated tool spindle for workpiece machining in a vertical or horizontal machining centre, in particular for milling, drilling and/or turning, having a spindle motor housing (3) in which a liquid cooling duct (2) extends, and having a spindle head housing (5) in which a liquid cooling duct (4) extends, wherein the liquid cooling ducts (2, 4) form a liquid cooling circuit for a coolant, **characterized in that** a liquid duct (12) branches off from the liquid cooling duct (4) in the spindle head housing (5) or from the liquid cooling duct (2) in the spindle motor housing (3), the coolant being able to be conducted from the liquid cooling circuit to at least one reclosable outlet opening (13) in the spindle head housing (5) or in the spindle motor housing (3) through said liquid duct (12), such that the cooling liquid in the spindle motor housing (3) and the cooling liquid in the spindle head housing (5) can drain out of the tool spindle by gravity.

2. Tool spindle according to Claim 1, **characterized in that** the outlet opening (13) is reclosable via a manual or power-operated drain valve.

3. Tool spindle according to Claim 2, **characterized in that** the drain valve has an electromagnet for opening and a spring for closing.

4. Tool spindle according to Claim 2, **characterized in that** the drain valve is to be opened by manual actuation and to be closed by spring actuation.

5. Tool spindle according to Claim 1, **characterized in that** the outlet opening (13) is reclosable by means of a screw plug (14) provided with a seal.

6. Tool spindle according to one of the preceding claims, **characterized in that** the outlet opening (13) is provided at the lowest point in the liquid cooling duct (4) of the spindle head housing (5).

7. Tool spindle according to one of the preceding claims, **characterized in that** the outlet opening (13) is provided at the lowest point in the liquid cooling duct (2) of the spindle motor housing (3).

## Revendications

1. Broche d'outil motorisée divisée en deux pour un usinage de pièce par enlèvement de copeaux dans un centre d'usinage vertical ou horizontal, en particulier pour un fraisage, forage et/ou tournage, avec un boîtier de moteur de broche (3), dans lequel un canal de refroidissement de liquide (2) s'étend, et avec un boîtier de tête de broche (5), dans lequel un canal de refroidissement de liquide (4) s'étend, les canaux de refroidissement de liquide (2, 4) formant un circuit de refroidissement de liquide pour un agent de refroidissement, **caractérisée en ce qu'**un canal de liquide (12) dérive du canal de refroidissement de liquide (4) dans le boîtier de tête de broche (5) ou du canal de refroidissement de liquide (2) dans le boîtier de moteur de broche (3), par lequel canal l'agent de refroidissement peut être guidé du circuit de refroidissement liquide vers au moins une ouverture de sortie (13) refermable dans le boîtier de tête de broche (5) ou dans le boîtier de moteur de broche (3) de sorte que le liquide de refroidissement dans le boîtier de moteur de broche (3) et le liquide de refroidissement dans le boîtier de tête de broche (5) puissent s'écouler de la broche de pièce par la force de gravité.

2. Broche d'outil selon la revendication 1, **caractérisée en ce que** l'ouverture de sortie (13) est refermable par une soupape d'évacuation manuelle ou mécanique.

3. Broche d'outil selon la revendication 2, **caractérisée en ce que** la soupape d'évacuation présente un électroaimant pour l'ouverture et un ressort pour la fermeture.

4. Broche d'outil selon la revendication 2, **caractérisée en ce que** la soupape d'évacuation est à ouvrir avec actionnement manuel et à fermer avec actionnement de ressort.

5. Broche d'outil selon la revendication 1, **caractérisée en ce que** l'ouverture de sortie (13) est refermable à l'aide d'une vis de fermeture (14) pourvue d'une garniture.

6. Broche d'outil selon l'une quelconque des revendications précédentes, **caractérisée en ce que** l'ouverture de sortie (13) est montée sur le point le plus bas dans le canal de refroidissement de liquide (4) du boîtier de tête de broche (5).

7. Broche d'outil selon l'une quelconque des revendications précédentes, **caractérisée en ce que** l'ouverture de sortie (13) est montée sur le point le plus bas dans le canal de refroidissement de liquide (2) du boîtier de moteur de broche (3).
